**Europäisches Patentamt**

**European Patent Office**

**Office européen des brevets**

(11) Veröffentlichungsnummer: **0 202 406**

**A2**

(12) # EUROPÄISCHE PATENTANMELDUNG

(21) Anmeldenummer: **86103199.5**

(51) Int. Cl.4: **G01F 11/26** , **B65D 47/00**

(22) Anmeldetag: **10.03.86**

(30) Priorität: **11.05.85 DE 3517072**

(43) Veröffentlichungstag der Anmeldung:
**26.11.86 Patentblatt 86/48**

(84) Benannte Vertragsstaaten:
**FR GB SE**

(71) Anmelder: **Heinlein, Hans**
**Dombühlstrasse 33**
**D-8801 Schillingsfürst(DE)**

(72) Erfinder: **Heinlein, Hans**
**Dombühlstrasse 33**
**D-8801 Schillingsfürst(DE)**

(74) Vertreter: **Hafner, Dieter, Dr.**
**c/o Patentanwaltskanzlei Dipl.-Phys. Dr. Karl**
**Schweinzer Essenweinstrasse 4-6**
**D-8500 Nürnberg 70(DE)**

(54) **Dosiervorrichtung für Flüssigkeiten.**

(57) Zur Entnahme einer bestimmten Flüssigkeitsmenge aus einem Behälter ist ein Becher (8) vorgesehen, der in einen Behältermund (7) bzw. in einem in den Behältermund (7) eingesetzten Ringteil (9) mit an seinem Umfang angeordneten Öffnungen (11) radial verdrehbar angeordnet ist. Eine zugehörige Verschlußkappe (3) weist eine oder mehrere in den verdrehbaren Becher (8) eingreifende Mitnehmeraussparung(en) (12) auf, die mit einem oder mehreren Mitnehmern (13) die an einem oberen Rand (14) des Bechers (8) angeordnet sind, zusammenwirken, sodaß die Mitnehmeraussparung(en) (12) mit dem (den) Mitneher(n) (13) zeitweilig im Eingriff sind.

EP 0 202 406 A2

FIG. 2

"Dosiervorrichtung für Flüssigkeiten"

Die Erfindung betrifft eine Dosiervorrichtung für Flüssigkeiten in Flaschen oder ähnlichen Behältern mit einer Verschlußkappe.

Um von einer Flüssigkeit, beispielsweise einem Arzneimittel, aus einem flaschenartigen Behälter eine genau definierte Menge abzuteilen, sind Tropfvorrichtungen, Meßpipetten und dergl. bekannt. Pipetten haben den Nachteil, daß sie dem Arzneimittelbehälter gesondert beigepackt werden müssen und häufig zerbrechbar sind. Bei Tropfvorrichtungen erfolgt die Entnahme einer bestimmten Menge (Volumen) an Flüssigkeit aus einem Behälter durch Abzählen der eine im wesentlichen konstante Größe (Volumen) aufweisenden Tropfen. Das exakte Abzählen einer bestimmten Tropfenzahl bereitet insbesondere älteren und gebrechlichen Personen, vor allem dann wenn der Tropfbeginn erst verzögert einsetzt oder die Tropfen in sehr rascher Reihenfolge folgen, große Schwierigkeiten. Ferner besteht bei bekannten Tropfvorrichtungen der Nachteil, daß sich die Luftzutrittsöffnung mit Flüssigkeit füllt oder daß bei kristallisierenden Flüssigkeiten die Flüssigkeitsaustrittsöffnung sich zusetzt. Desweiteren genügen eine große Zahl der bekannten Dosier bzw. Tropfvorrichtungen nicht den erforderlichen absoluten und relativen Genauigkeitsanforderungen. Viele dieser Vorrichtungen neigen zum Durchschießen der Flüssigkeit, während bei anderen der Nachteil besteht, daß der Tropfvorgang nur sehr schwer in Gang zu bringen ist, d.h. daß in Abhängigkeit von den Eigenschaften der eingefüllten Flüssigkeit verschiedene Tropfer verwendet werden müssen. Eine weitere Schwierigkeit besteht darin, daß durch Entfernen der Tropfvorrichtung der Inhalt des Behälters leicht zugänglich wird, so daß, beispielsweise bei hochwirksamen Arzneimitteln eine unzulässig große Menge auf einmal entnommen werden kann.

Bei einer bekannten Dosiervorrichtung (DE-PS 23 24 080) ist ein in das Behälterinnere ragender Dosierraum vorgesehen, der als ein mit der Verschlußkappe an deren Kappeninnenseite mit einem Steg verbundener Meßbecher ausgebildet ist, wobei zwischen dem Meßbecher und dem Boden der Verschlußkappe· ein beim Umstürzen des Behälters zeitweilig Flüssigkeit zurückhaltender Raum vorgesehen ist. Bei dieser bekannten Dosiervorrichtung besteht die Möglichkeit, daß der mit der Kappe verbundene Meßbecher beschädigt wird. Es besteht ferner der Nachteil, daß der Behälter während des Meßvorganges bzw. der Abgabe der abgemessenen Menge Flüssigkeit, unverschlossen ist, und somit Flüssigkeit unkontrollierbar entnommen werden kann.

Der Erfindung liegt demgegenüber die Aufgabe zugrunde, eine Dosiervorrichtung zu schaffen, die leicht zu montieren ist, geschützt im Behälterinneren angeordnet werden kann, die eventuelle Toleranzunterschiede in der Behälteröffnung ausgleicht und mit der in einfacher Weise eine stets exakt gleiche Flüssigkeitsmenge entnommen werden kann.

Diese Aufgabe wird nach der Erfindung bei einer Dosiervorrichtung der eingangs erläuterten Art im wesentlichen dadurch gelöst, daß in einem Behälter mund ein Ringteil mit an seinem unteren Rand angeordneten Öffnungen und ein Becher mit an seinem Umfang angeordneten Öffnungen radial verdrehbar angeordnet sind, daß die zugehörige Verschlußkappe eine oder mehrere in den verdrehbaren Becher eingreifende Mitnehmeraussparung(en) aufweist, daß ein oder mehrere Mitnehmer an einem oberen Rand des Bechers angeordnet sind und daß die Mitnehmeraussparung(en) mit dem -(den) Mitnehmer(n) zeitweilig im Eingriff sind.

Besonders zweckmäßig ist es, wenn an dem in den Behältermund einsetzbaren Ringteil an seiner Außen-und/oder Innenseite ein oder mehrere angeformte oder z.B. S-förmig ausgebildete zusammenwirkende Toleranzausgleichs-bzw. Dichtungswülste angeformt sind.

Der erfindungsgemäße verdrehbare Becher kann auch direkt in den entsprechend ausgebildeten Behältermund des Behälters eingesetzt werden. Die erfindungsgemäße Dosiervorrichtung kann somit auch aus zwei Teilen, nämlich bei Verwendung von Spezialflaschen aus dem in den Behältermund einsetzbaren, verdrehbaren Becher und der Verschlußkappe bestehen.

Im allgemeinen besteht die Dosiervorrichtung aus drei Teilen, nämlich bei der Verwendung an Normalflaschen, aus dem in den Behältermund einsetzbaren Ringteil, dem in den Ringteil einsetzbaren, verdrehbaren Becher und der auf den Becher wirkenden Verschlußkappe.

Zur Begrenzung der relativen Verdrehung des Bechers im Ringteil um einen bestimmten Winkel sind bei einem bevorzugten Ausführungsbeispiel der Erfindung an der Innenwand des Ringteiles in radialem Abstand Ausnehmungen am kappenseitigen Ende vorgesehen, die mit oberhalb der Öffnungen angeordneten Vorsprüngen des Bechers zusammenwirken.

Um den Becher im Behälter oder im Ringteil sicher zu fixieren, so daß er beim Ausgießen nicht heraus rutschen bzw. fallen kann, weist der Becher nach einem weiteren Merkmal der Erfindung, an der Außenfläche einen Einrastrand und der Ringteil eine entsprechende Rastnut auf.

Zum Dosieren bzw. Abfüllen der konstanten Menge der Flüssigkeit wird der Behälter mit der aufgeschraubten Verschlußkappe auf den Kopf gestellt und leicht geschüttelt, sodann wird der Behälter in die Normallage zurückgebracht. In dem Becher befindet sich dann die entsprechende Menge der Flüssigkeit. Eine Verbindung vom Becher bzw. bei abgenommener Verschlußkappe von außen besteht somit nicht mehr.

Der Dosiervorgang wird durch das Zusammenwirken der dem Becher in geschlossenem Zustand der Flasche gegenüberliegenden Öffnungen im Behälter und im Ringteil erreicht. Beim Kippen des Behälters läuft durch die Öffnungen die Dosier-, bzw. der obere Teil der Becherkammer voll Flüssigkeit, die dann beim Zurückkippen in den unteren Teil des Bechers fließt, wobei überschüssige Flüssigkeit durch die Öffnungen in das Innere des Behälters zurückfließt.

Um ein einwandfreies Abdichten des Behälters zu gewährleisten ist nach einem weiteren Merkmal der Erfindung der Ringteil mit einem radialen auf dem Behältermund aufliegenden abgestuften Dichtflansch, mit einem x.B. nach oben dreieckigen oder L-förmigen Querschnitt, versehen. Dieser Dichtflansch dient zugleich als axialer Anschlag bei der Montage des Ringteiles. Weiterhin ist es vorteilhaft, daß der Dichtflansch des Ringteiles abgestuft ist, so daß nach dem Ausgießen der Tropfen exakt abreißt und nicht über das Gewinde läuft bzw. dieses verschmutzt.

Nach einem noch weiteren vorteilhaften Merkmal der Erfindung sind zwischen den Öffnungen des Bechers an seiner Innenwand, zur Verstärkung dieser, achsparallele Stege vorgesehen.

Nach einer weiteren Ausgestaltung der Erfindung weist die Innenwand des Bechers achsparallel, z.B. sich über die Länge des Bechers erstreckende Mitnehmer auf, die auftretende Torrisionskräfte, beim Verdrehen des Bechers im Ringteil, aufnehmen und zugleich die Innenwand des Bechers verstärken.

Bei einer erfindungsgemäßen Dosiervorrichtung können Verschlußkappen aller Art Verwendung finden.Gemäß einem vorteilhaften Ausführungsbeispiel der Dosiervorrichtung ist die Verschlußkappe als Schraubkappe mit einem Innengewinde, das mit einem Außengewinde am Behälterhals zusammenwirkt, ausgebildet.

Einzelheiten, Merkmale und Vorteile der Erfindung werden anhand der Zeichnung näher erläutert, die schematisch ein Ausführungsbeispiel darstellt. Dabei zeigt:

Fig. 1 die Teile einer erfindungsgemäßen Dosiervorrichtung in perspektivischer Darstellung,

Fig. 2 eine Dosiervorrichtung gemäß Fig.1 in Verbindung mit einem Behälter bei festgeschraubter Verschlußkappe,

Fig. 3 die Anordnung nach Fig.2 nach einer ca. um eine viertel Umdrehung losgeschraubten Verschlußkappe, und

Fig. 4 die Anordnung nach Fig. 2 bei abgeschraubter Verschlußkappe.

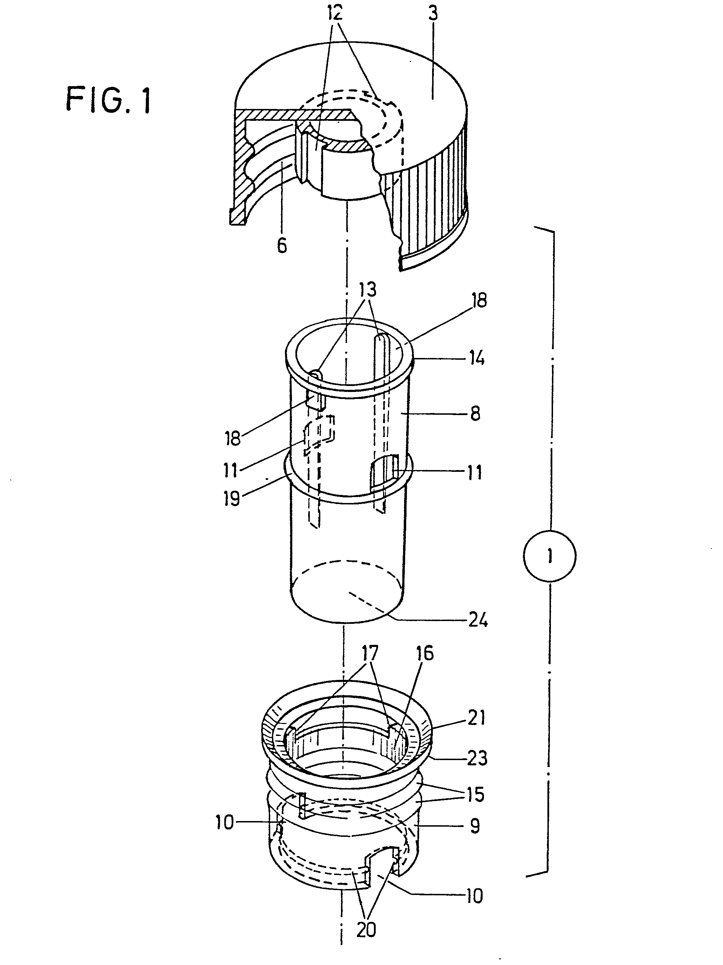

In Fig. 1 ist eine erfindungsgemäße Dosiervorrichtung 1 perspektivisch in Einzelteilen dargestellt. Die Dosiervorrichtung 1 besteht im wesentlichen aus einem Becher 8 mit einem oberen Rand 14, Öffnungen 11 und einem Boden 24 sowie einem Ringteil 9. An der Außenwand des Bechers 8 ist der Rand kappenseitig als Ringleiste ausgebildet, die als axialer Anschlag dient und ein definiertes Einschieben des Bechers in den Behälterhals 4 bzw. in den Ringteil 9 ermöglicht. Desweiteren weist der Becher 8 an der Außenfläche einen Einrastrand 19 auf der in eine Rastnut 20 im Ringteil 9 einrastet und ein Herausfallen bzw. Herausrutschen des Bechers beim Ausgießen der dosierten Flüssigkeitsmenge verhindert.

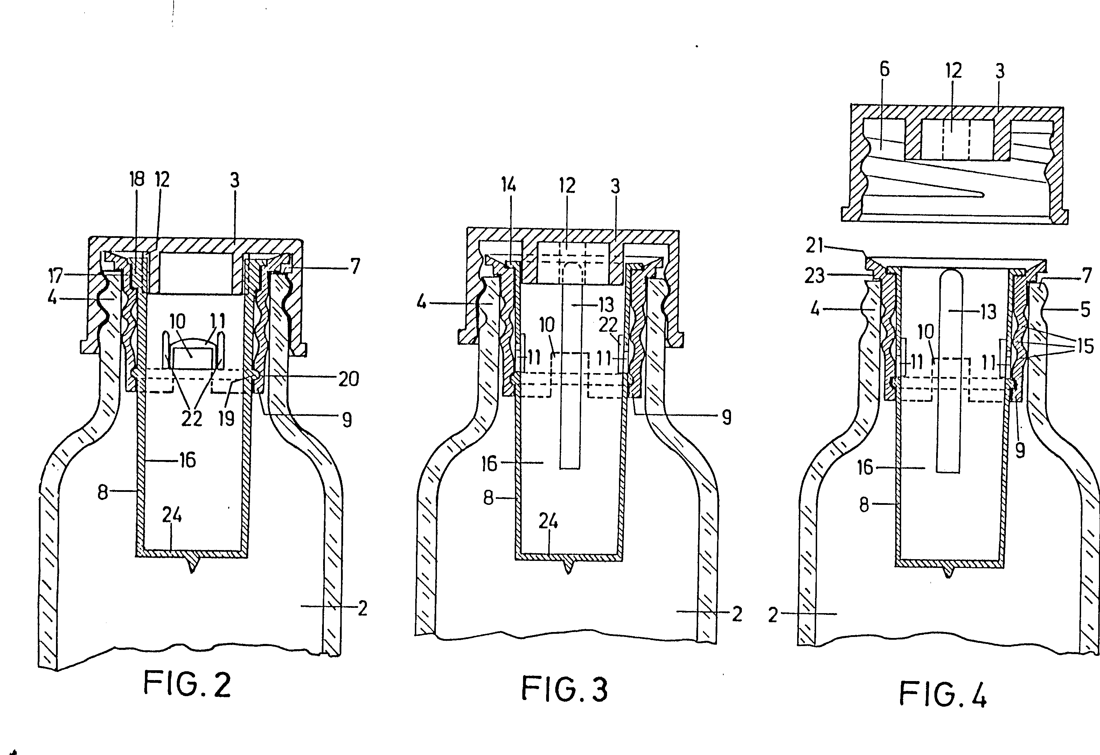

Der Ringteil 9 wird (Fig. 2) in einem Behältermund 4 durch an seiner Außenseite und/oder Innenseite angeformte, vorzugsweise zusammenwirkende Toleranzausgleichs-bzw. Dichtungs-und·Widerstandswülste 15 dicht anliegend eingesetzt. Die Dichtungswülste 15 sind vorzugsweise S-förmig an der Innen-und Außenseite gegenüberliegend angeordnet, so daß zwischen Ringteil 9, Becher 8 und Behälter hals 4 eine Vorspannung entsteht, die hervorragend die bei der Flaschenfertigung entstehenden Toleranzen im Behälterhals ausgleicht und diesen abdichtet. Die beim Einpressen des Ringteiles 9 entstehende Vorspannung bewirkt auch eine teilweise Hemmung gegen ein Verdrehen des Ringteiles 9.

Der Ringteil 9 weist an seinem oberen Ende einen radialen Dichtflansch 21 auf, der eine Abstufung 23 an seiner unteren Seite hat. Diese Abstufung bewirkt .u.a. ein exaktes Abreißen des Flüssigkeitstropfens beim Ausgießen der dosierten Menge und verhindert ein Ablaufen über das Flaschengewinde, so daß Verschmutzungen dieses weitgehend vermieden werden. Der Dichtflansch 21 weist an seinem kappenseitigen Ende einen z.B. nach oben dreieckigen oder L-förmigen Querschnitt versehenen Randbereich auf, der beim Ausgießen der Flüssigkeit auch ein scharfes Abreißen des Flüssigkeitstropfens am Rand bewirkt.

In Fig. 2 ist eine erfindungsgemäße Dosiervorrichtung 1 in einem flaschenartigen Behälter 2 für Flüssigkeiten eingesetzt, und, bei fest aufgeschraubter Verschlußkappe 3, im Schnitt dargestellt. Der Behälterhals 4 kann mit einem Außengewinde 5 versehen sein, das bei einer als Schraubkappe ausgebildeten Verschlußkappe 3 mit einem Innengewinde 6 in der Verschlußkappe 3 zusammenwirkt. Im Behältermund 7 ist bei dem dargestellten Ausführungsbeispiel der Ringteil 9 eingesetzt und liegt mit seinem radialen Dichtflansch 21 am oberen Rand des Behälterhalses 4 an. Im Ringteil 9 ist der Becher 8 verdrehbar eingesetzt. Die Verdrehung ist durch an der Innenwand 16 des Ringteiles 9 in radialem Abstand angeordneten Ausnehmungen 17 am kappenseitigen Ende und mit oberhalb der Öffnungen 11 angeordneten Vorsprüngen 18 des Bechers 8, begrenzt. Dabei ist die Ausbildung derart getroffen, daß im geschlossenen Zustand des Behälters, d.h. bei festgeschraubter Verschlußkappe 3 die Vorsprünge 18 am jeweiligen entsprechenden Anschlag anliegen und zwar so, daß die Öffnungen 11 des Bechers 8 sich mit den Öffnungen 10 des Ringteiles 9 voll decken, so daß Flüssigkeit beim auf den Kopfstellen der Flasche leicht in den Hohlraum des Behälters 8 aus dem Flascheninneren eintreten kann. In dieser Darstellung ist das Zusammenwirken der Mitnehmeraussparungen 12 der Kappe in entsprechende Mitnehmer 13 die an der Innenseite des Bechers 8 angeordnet sind, gezeigt.

Beim Abschrauben (Lösen) der Verschlußkappe 3 vom Behälter 2 wird der Becher 8, durch den Formschluß der Mitnehmer 13 mit den Mitnehmeraussparungen 12 verdreht, bis die an der Außenwand des Bechers angeordneten Vorsprünge 18 am Gegenanschlag der Ausnehmungen 17 im Ringteil 9 anstoßen, wie aus Fig. 1,3 ersichtlich, und die Öffnungen 10 und 11 von einander so verschoben sind, daß der Innenraum des Bechers 8 vom Behälterraum abgeschlossen ist.

In Fig. 3 sind die Teile der erfindungsgemäßen Dosiervorrichtung in ihrer relativen Lage dargestellt, wie sie sich bei Beginn des Abschraub-bzw. am Ende des Zuschraubvorganges ergibt. Die Mitnehmer 13 sind mit den Mitnehmeraussparungen 12 beim Abschrauben der Kappe durch die axiale Relativbewegung im Ausgriff, oder entsprechend beim Zuschrauben der Kappe im Eingriff.

In Fig. 4 ist das erfindungsgemäße Ausführungsbeispiel mit abgeschraubter Verschlußkappe 3 dargestellt.

Die Handhabung einer erfindungsgemäßen Dosiervorrichtung erfolgt in folgender Weise: Zunächst befindet sich der Behälter 2 mittels der aufgesetzten bzw. aufgeschraubten Verschlußkappe 3 in völlig verschlossenem Zustand. Dabei ist der Becher 8 so verdreht (Fig.2), so daß die Öffnungen 11 im Becher 8 und die Öffnungen 10 im Ringteil 9 für den Zutritt von Flüssigkeit aus dem Behälter 2 offen sind. Dann wird der geschlossene Behälter gekippt bzw. auf den Kopf gestellt, so daß durch die Öffnungen 11 und 10 Flüssigkeit in den oberen Hohlraum des Bechers 8 gelangt. Die Luft aus dem Hohlraum des Bechers 8 kann durch die z.B. gegenseitig angeordneten Öffnungen 10 und 11 in das Behälterinnere ausströmen. Beim Aufrichten des Behälters 2 fließt die im oberen Hohlraum des Behälters 8 befindliche Flüssigkeit in den unteren Hohlraum des Bechers 8.

Nach Beginn des Abschraubens um einen definierten Winkel der Verschlußkappe 3 bzw. nach Abschrauben vom Behälter 2 wird der Becher 8 innerhalb des Ringteiles 9 verdreht (Fig.3). Dadurch verschließen sich die Öffnungen 10 und 11 gegeneinander. Beim weiteren Abschrauben der Kappe 3 verdreht sich nun das Ringteil 9 und der Becher 8 insgesamt im Behältermund 7 bzw. Behälterhals 4 soweit, bis die Mitnehmer 13 und die Mitnehmeraussparungen 12 nicht mehr miteinander im Eingriff sind. Die Kappe kann nun leicht ganz abgeschraubt werden. Nach Entfernen der Schraubkappe 3 befindet sich das gewünschte dosierte Volumen-Flüssigkeit im Behälter 8, der nunmehr, bei verschlossenen Öffnungen 10 und 11, als Ausgießer dient. Außerdem ist sichergestellt, daß bei abgenommener Verschlußkappe 3 weder Flüssigkeit aus dem Behälter 2 in den Dosierbecher 8 nachlaufen kann noch Verunreinigungen in den Behälter 2 eindringen können. Somit kann im offenen Zustand des Behälters 2 keine Flüssigkeit in den Becher 8 nachgefüllt werden bzw. nachlaufen.

Durch die erfindungsgemäße Ausbildung des abgestuften Dichtflansches 21 mit einem z.B. nach oben dreieckigen oder L-förmigen Querschnitt versehenen Randbereich ist sichergestellt, daß beim Ausgießen bzw. nach dem Ausgießen der Flüssigkeitstropfen scharf abgetrennt wird und Verunreinigungen des Flaschengewindes durch übergelaufene Flüssigkeitsreste weitgehend vermieden werden.

Bei einem vereinfachten Ausführungsbeispiel der erfindungsgemäßen Dosiervorrichtung (nicht dargestellt) ist der Becher 8 direkt in den Behältermund 7 des Behälters 2 eingesetzt. Diese Ausbildungsform ist insbesondere zweckmäßig bei einem flaschenartigen Behälter 2 mit kleinem Durchmesser bzw. kleinem Volumen, sowie bei der Verwendung von Kunststoffmaterial für die Behältnisse. Bei diesem Ausführungsbeispiel sind zur Begrenzung der Drehbewegung des Bechers 8 die entsprechenden Ausnehmungen 17 , die Öffnungen 10 (Kanäle) und die Rastnut 20 im Behältermund angebracht. Bei diesem Ausführungsbeispiel können daher handelsübliche flaschenartige Behälter nicht mehr verwendet werden. Bei der einfachten Ausführung ohne die Verwendung eines Ringteiles 9 muß also eine spezielle Ausbildung des Flaschenmundes des Behälters vorgesehen werden.

Die Erfindung ist somit nicht auf das dargestellte und beschriebene Ausführungsbeispiel beschränkt. Es können beispielsweise zusätzlich an der Verschluß kappe 3 mittel zur Originalitätssicherung vorgesehen sein bzw. kann die Verschlußkappe 3 als Kindersicherheitsverschluß ausgebildet sein.

Die Erfindung umfaßt auch alle fachmännischen Abwandlungen, Weiterbildungen und Vereinfachungen sowie Teil-und/oder Unterkombinationen der beschriebenen und/oder dargestellten Merkmale und Maßnahmen.

Bezugszeichenliste

1 Dosiervorrichtung

2 flaschenartiger Behälter für Flüssigkeiten

3 Verschlußkappe

4 Behälterhals

5 Außengewinde an 2

6 Innengewinde an 3

7 Behältermund

8 Becher

9 Ringteil

10 Öffnung in 9

11 Öffnung in 8

12 Mitnehmeraussparungen

13 Mitnehmer

14 oberer Rand des Bechers

15 Toleranz-Dichtungswülste

16 Innenwand von 9

17 Ausnehmung

18 Vorsprung

19 Einrastrand

20 Rastnut

21 Dichtflansch

22 Stege

23 Abstufung

24 Boden

## Ansprüche

1. Dosiervorrichtung für Flüssigkeiten in Flaschen oder ähnlichen Behältern mit einer Verschlußkappe, **dadurch gekennzeichnet**, daß in einem Behältermund (7) ein Ringteil (9) mit an seinem unteren Rand angeordneten Öffnungen - (10) und ein Becher (8) mit an seinem Umfang angeordneten Öffnungen (11) radial verdrehbar angeordnet sind, daß die zugehörige Verschlußkappe (3) ein oder mehrere in den verdrehbaren Becher - (8) eingreifende Mitnehmeraussparung(en) (12) aufweist, daß einer oder mehrere Mitnehmer (13) an einem oberen Rand (14) des Bechers (8) angeordnet sind und daß die Mitnehmeraussparung(en) - (12) mit dem (den) Mitnehmer(n) (13) zeitweilig im Eingriff sind.

2. Dosiervorrichtung nach Anspruch 1, **dadurch gekennzeichnet daß** der in den Behältermund - (7) einsetzbare , Ringteil (9) an seiner Innen- und/oder Außenseite eine oder mehrere angeformte oder z.B. S-förmig ausgebildete zusammenwirkende Toleranzausgleichs-bzw. Dichtungswülste - (15), aufweist.

3. Dosiervorrichtung nach Anspruch 1 oder 2, **dadurch gekennzeichnet, daß** an der Innenwand (16) des Ringteiles (9) In radialem Abstand Ausnehmungen (17) am kappenseitigen Ende vorgesehen sind, die mit oberhalb der Öffnungen (11) angeordneten Vorsprüngen (18) des Bechers (8) zusammenwirken, zur Begrenzung der relativen Verdrehung des Bechers (8) im Ringteil (9) um einen bestimmten Winkel.

4. Dosiervorrichtung nach Anspruch 1 oder folgenden, **dadurch gekennzeichnet, daß** der Becher - (8) an der Außenfläche einen Einrastrand (19) und der Ringteil (9) eine Rastnut (20) aufweist.

5. Dosiervorrichtung nach Anspruch 1 oder folgenden, **dadurch gekennzeichnet, daß** der Ringteil - (9) einen radialen, auf dem Behältermund (7) aufliegenden z.B. abgestuften Dichtflansch (21) mit einem z.B. nach oben dreieckigen oder L-förmigen Querschnitt versehenen Randbereich aufweist.

6. Dosiervorrichtung nach Anspruch 1 oder folgenden, **gekennzeichnet durch** zwischen den Öffnungen (11) an der Innenwand des Bechers (8) vorgesehene, achsparallele Stege (22).

7. Dosiervorrichtung nach Anspruch 1 oder folgenden, **gekennzeichnet durch** an der Innenwand des Bechers (8) vorgesehene, achsparallele, z.B. sich über die Länge des Bechers (8) erstreckende, Mitnehmer (13)

8. Dosiervorrichtung nach Anspruch 1 oder folgenden, **dadurch gekennzeichnet,** daß die Verschluß kappe (3) als Schraubkappe mit einem Innengewinde (6), das mit einem Außengewinde (5) am Behälterhals (4) zusammenwirkt, ausgebildet ist.

**FIG. 1**

FIG.2

FIG.3

FIG.4